# EUROPEAN PATENT APPLICATION

(11) **EP 4 186 688 A1**
(43) Date of publication of application: **31.05.2023**
(21) Application number: 22210362.4
(22) Date of filing: 29.11.2022
(51) Int. Cl.: B32B 7/12, B32B 27/08, B32B 27/30, B32B 27/32, B32B 27/34, C08J 5/18, C08L 23/04

(54) **VACUUM SKIN PACKAGING FILM**

(30) Priority: 30.11.2021 EP 21211500
(71) Applicant: Flexopack S.A., 19400 Koropi (GR)
(72) Inventor: GKINOSATIS, Dimitris, 19400 Koropi (GR)
(74) Representative: Roukounas, Dimitrios

(57) **Abstract**

A plastic film suitable for vacuum skin packaging application. The film is crosslinked and comprises ethylene acrylate copolymer.

## Description

### Technical field of the invention

The present invention relates to a film suitable for the vacuum skin packaging process.

### Background of the invention

Vacuum skin packaging is a known packaging process in which after food is placed in a container (often a tray), air is drawn from the package prior to sealing it close. Such packaging has comparable storage and preservation characteristics to shrinkable packaging and usually is more eye appealing.

More specifically, vacuum skin packaging (VSP) is a process well known in the art using a thermoplastic packaging material to enclose a food product. The terms "vacuum skin packaging" or "VSP" as used herein indicate that the product is packaged under vacuum and the space containing the product is evacuated from gases at the moment of packaging. The top flexible film is also referred to as "skin-forming", "skin" or "upper" film.

In the vacuum skin packaging process, an article may be placed on a rigid, semi-rigid or flexible support member, that can be flat or shaped, e.g., tray-shaped, bowl-shaped or cup-shaped (called "bottom" web), and the supported article is then passed to a chamber where a "top" web is first drawn upward against a heated dome and then draped down over the article. The movement of the top web is controlled by vacuum and/or air pressure, and in a vacuum skin packaging arrangement, the interior of the container is vacuumed before final welding of the top web to the bottom web. In the VSP process, the upper heated film forms a tight skin around the product and is tightly adhered to the part of the support not covered by the product. Vacuum skin packaging is described in many references, including FR 258357, FR 1286018, AU 3491504, U.S. Re 30009, U.S. Pat. Nos. 3,574,642, 3,681,092, 3,713,849, 4,055,672, 5,346,735, WO 2009141214, EP 2722279, EP 2459448.

Vacuum skin packaging is commonly employed for packaging food products such as fresh and frozen meat and fish, cheese, processed meat, ready meals and the like. The final package presents a tight fitting, clear package which protects the food article from the external environment.

The demands imposed nowadays on the packaging films used in such vacuum skin packaging applications are particularly high: the films have to stand the heating and stretching conditions within the vacuum chamber of the packaging machine without undergoing excessive softening and perforations, they must be highly formable.

Good formability is highly desirable in VSP applications to ensure that the heated film adequately conforms to the shape of the packaged product, without leaving pleats on the package surfaces or without forming protruding areas of self-adhesion of the film, at the package corners or sides. This unwanted phenomenon, known as bridging or webbing, can be so marked to extend to separate forming units in the same packaging operation. Obviously, packages showing these defects in the top skin draping are not acceptable for the consumer and therefore they have to be rejected. Other important features of VSP films include optical properties, such as glossiness and haze, which contribute to an attractive package appearance.

Moreover, VSP films must guarantee, in combination with supports of various shape and composition, an appropriate opening force in order to allow the consumer easily opening the package and taking out the packaged product. During storage, in addition to easy openability, seal and package integrity must be kept, in order to effectively preserve the product.

As well known in the art, such performance in terms of easy opening and integrity is particularly difficult to be achieved in a vacuum skin package. In fact, vacuum skin packaging processes do not apply a standard sealing step through a heated sealing bar, as for example in tray lidding packaging processes, but the adhesion of the top to the bottom is achieved through the draping of the heated top onto the entire surface of the bottom not covered by the product after removal of the vacuum from the dome. The final quality and strength of the adhesion are mainly dependent on the temperature achieved by the top, on the sealing properties of the outer surfaces and on the chemical compatibility between the sealant layers of the top and the bottom.

In the prior art, several patents are teaching films suitable to operate as "top" vacuum skin packaging films.

For example, EP243510 teaches the use of ethylene vinyl acetate copolymer (EVA) in such a film.

However, such a film is prone to breakages if difficult high protrusion products are to be packed.

Patent application EP343877 teaches the use of ionomer as sealing layer.

### Summary of the invention

The film of the present invention is a crosslinked film comprising at least 30% per volume of ethylene acrylate copolymer.

More specifically, the multilayer film is a crosslinked film comprising at least 30% of ethylene acrylate copolymer and further comprising at least one oxygen barrier copolymer.

### Definitions

In this application the following definitions are used:
The term "film" refers to a flat or tubular flexible structure of thermoplastic material.

The term "heat shrinkable" refers to a film that shrinks at least 10% in at least one of the longitudinal and transverse directions when heated at 90°C for 4 seconds. The shrinkability is measured in water according to ASTM 2732. For temperatures like 100°C or more, glycerine is used as a reference liquid.

The term "total heat shrinkability" refers to the sum of heat shrinkability at the MD direction and heat shrinkability at the TD direction. In all cases, ASTM 2732 is used for measurement of shrinkabilities.

The term "multilayer" refers to a film comprising 2 or more layers.

The phrase "longitudinal direction" or "machine direction" herein abbreviated "MD" refers to a direction along the length of the film.

The phrase "outer layer" refers to the film layer which comes in immediate contact with the outside environment (atmosphere). Therefore, the film has two outer layers, one at the inside of the pack and one at the outside.

The phrase "outer sealing layer" refers to the outer film layer which comes into direct contact with the content of the package.

The phrase "inner layer" refers to any film layer that is not "outer layer».

As used herein, the term "homopolymer" refers to a polymer resulting from polymerization of a single monomer.

As used herein, the term "copolymer" refers to a polymer resulting from polymerization of at least two different polymers.

As used herein, the term "polymer" includes both above types.

As used herein, the term "polyolefin" refers to any polymerized olefin, which can be linear, branched, cyclic, aliphatic, substituted or unsubstituted. More specifically, included in the term polyolefin are homopolymers of olefin, copolymers of olefin, copolymers of an olefin and a non-olefinic comonomer (such as ester) etc.

Specific examples include polyethylene homopolymer, polypropylene homopolymer, polybutene homopolymer, ethylene alpha olefin copolymer, propylene alpha olefin copolymer, butene alpha olefin copolymer, ionomer, ethylene ester copolymer etc.

As used herein the term "polyethylene" identifies polymers consisting essentially of the ethylene repeating unit. The ones that have a density more than 0.940 are called high density polyethylene (HDPE), the ones that are have less than 0.940 are low density polyethylene (LDPE).

As used herein the phrase "ethylene alpha olefin copolymer" refers to polymers like linear low density polyethylene (LLDPE), medium density polyethylene (MDPE), very low density polyethylene (VLDPE), ultra-low density polyethylene (ULDPE), metallocene catalyzed polymers and polyethylene plastomers and elastomers.

As used herein the term "homogeneous ethylene alpha olefin copolymers" refer to ethylene alpha olefin copolymers having a molecular weight distribution less than 2.7 as measured by GPC. Typical examples of these polymers are AFFINITY^{®} from DOW or Exact^{®} from Exxon.

As used herein the phrase "styrene polymers" refers to styrene homopolymer such as polystyrene and to styrene copolymers such as styrene-butadiene copolymers, styrene-butadiene-styrene copolymers, styrene-isoprene-styrene copolymers, styrene-ethylene-butadiene-styrene copolymers, ethylene-styrene copolymers and the like.

As used herein the term "ethylene acrylate copolymers" refers to copolymers of ethylene and acrylate. This term includes ethylene methyl acrylate copolymers (EMA), ethylene butyl acrylate copolymers (EBA), ethylene ethyl acrylate copolymers (EEA), ethylene methyl methacrylate copolymers (EMMA) and the like.

As used herein the phrase "ethylene vinyl acetate copolymer" or EVA refer to copolymers of ethylene and vinyl acetate.

As used herein the phrase "ethylene ester copolymer" includes any polymer made from ethylene and ester monomers. It is obvious that this term includes EVAs, EMAs and other polymers.

As used herein the term "oxygen barrier polymer" refers to polymers which have the property to limit the passage of oxygen through a film or a layer comprising the polymer. Common materials, are EVOH, PVDC or polyamide.

As used herein, the term EVOH refers to saponified products of ethylene vinyl ester copolymers. The ethylene content is typically in the range of 25 to 50% per mol. All the later references to EVOH ethylene content will be in % per mol.

As used herein the term PVDC refers to a vinylidene chloride copolymer wherein a major amount of the copolymer comprises vinylidene chloride and a minor amount of the copolymer comprises one or more monomers such as vinyl chloride and/or alkyl acrylates and methacrylates.

As used herein the term "polyamide" refers to homopolymers and copolymers. Polyamide 6, polyamide 66, polyamide 12, polyamide 6/66, polyamide 6/12, polyamide elastomers, MXD polyamides and other copolymers are specifically useful for the invention.

As used herein the term "polyester" refers to polymers comprising terephthalate units. Examples of polyesters are PET (polyethylene terephthalate), PBT (polybutylene terephthalate), polyester elastomer (block copolymer comprising ester or ether units), PTT and other similar polymers.

As used herein, the term "ionomer" comprises the copolymers of ethylene and methacrylic or acrylic acid being metal neutralized. An example of such material is Surlyn^{®} from Dupont.

As used herein, the term "polypropylene" refers to polymers incorporating propylene structural units. Examples of these, are homo polypropylenes, random copolymers of propylene and ethylene, block copolymers of propylene and ethylene, copolymers or blends of propylene and rubber (such as blends of polypropylene and ethylene propylene rubber), propylene ethylene alpha olefin terpolymers and others.

These polymers may be isotactic, syndiotactic or atactic. Isotactic is preferred.

As used herein the term "substantially non resilient material" refers to materials or material compounds comprising inorganics like calcium carbonate, titanium dioxide, wollastonite, mica, glass fibers, dolomite, silica and the like.

All measurement methods mentioned herein are readily available for the skilled person. For example, they can be obtained from the American National Standards Institute at: www.webstore.ansi.org

All percentages are based on weight per weight ratio, except when otherwise stated.

### Detailed description of the invention

The present invention provides a crosslinked multilayer film suitable for vacuum skin packaging comprising
at least 30% per volume of at least one ethylene acrylate copolymer and optionally further comprising at least one oxygen barrier polymer.

According to a preferred embodiment the film comprises from 40% to 90% per volume ethylene acrylate copolymer, more preferably from 50% to 80% per volume.

In a preferred embodiment of the film, the ethylene acrylate copolymer is EMA, EBA or EMMA.

In a further preferred embodiment, the acrylate content of the copolymer per mass is at least 5%, more preferably at least 10%, more preferably at least 12%.

In a preferred embodiment of the film, the ethylene acrylate copolymer has a melting point of less than 100 °C.

In a preferred embodiment of the film the ethylene acrylate copolymer has a Melt Flow Index of less than 4 measured at 190 °C/2,16 kg as per ASTM 1238.

The film can be produced by processes well known in the art. In a preferred embodiment, the film is produced by conventional air cooled hot blown film process.

In a preferred embodiment of the film, the film is irradiated by electron beam or by gamma radiation.

In a preferred embodiment of the film the total thickness of the film is from 50 to 300 microns, more preferably 70 to 250 microns.

### Film structure

The film is generally a film comprising 3 or more layers, such as 9 layers or more.

Such layers can be the outer sealing layer (in direct contact with the food), oxygen barrier layer (comprising for example polyamide and/or EVOH), abuse layers and adhesive tie layers (allowing bonding between layers that have no physical adhesion).

### Outer sealing layer

The outer sealing layer of the film is preferably polyolefin based, more preferably ethylene copolymer based., even more preferably ethylene alpha olefin copolymer based or ethylene ester based (such as EVA and/or EMA). For being able to seal to more unconventional bottom sheets or trays like aluminium the outer sealing layer may comprise tackifiers or other compounds.

The thickness of the outer sealing layer is preferably from 5 to 100 microns, more preferably from 10 to 80 microns.

### Core layer

The film in one embodiment comprises in the core layer a high oxygen barrier material so that it protects the components of the pack from the detrimental effect of oxygen ingress. EVOH is a preferred option but also polyamide and PVDC are viable alternatives. The EVOH is preferably 24 to 50% ethylene per mol, more preferably 27 to 48% per mol. Even more preferably the EVOH is characterized by an ethylene content of 29 to 48% per mol.

The thickness of the core layer is preferably from 3 to 20 microns, with a more preferable thickness being 5 to 16 microns.

### Abuse layer(s)

Preferably, the abuse layer(s) comprise(s) an ethylene acrylate copolymer. This polymer can be alone in this layer or in a form of blend or compound. Suitable blending partners for the ethylene acrylate copolymer include ethylene alpha olefin copolymers, styrene polymers, LDPE, ionomers, EVA copolymers and others.

### Tie layer(s)

As well known in the art, there is often not enough natural adhesion between ethylene acrylate copolymers and high barrier polymers such as EVOH. Therefore, suitable adhesive resins can be used so that the film does not collapse under the oven heating. Suitable materials for the tie layer process include maleic anhydride modified EVA, maleic anhydride modified polyethylene, maleic anhydride modified EMA, maleic anhydride modified elastomer, partially saponified EVA copolymer and polyurethane elastomer.

According to a preferred embodiment, the ethylene acrylate copolymer is comprised in the outer sealing layer and/or in an abuse layer of the film.

### Examples

### Example 1

### Extrusion process:

A 7 layer film is produced in an air cooled hot blown film line. The film structure is as follows

| | |
|---|---|
| Outer layer | 100% of linear low-density polyethylene material Dowlex^{®} NG5056E from Dow Chemical company. |
| First abuse layer | EMA having 18% per mass methyl acrylate content |
| First tie layer | Admer^{®} 518E (LLDPE maleic anhydride grafted material) |
| Barrier Layer | EVOH 38% mol having a melt flow index of about 2 measured at 190 °C, 2.16 kilos |
| Second tie layer | LLDPE based tie layer same as first tie layer |
| Second abuse layer | EMA having 18% per mass methyl acrylate content |
| Sealing layer | 70% metallocene LLDPE + 30% low density polyethylene |

Thickness of different layers are as follows
22/14/8/8/8/20/20 microns with total thickness 100 microns EMA content per volume is 34%

### Crosslinking:

The film was crosslinked at a radiation dose of 10 Mrads.

### Example 2

The same film was produced but instead of the EMA copolymer an EBA copolymer was used. The EBA copolymer had 18% per mass butyl acrylate.

### Example 3 (comparative)

In the comparative example, the ethylene acrylate polymers were substituted by EVA copolymer with 18% vinyl acetate per mass. The EVA copolymer is used as prior art as per EP0243510.

### Measurement of vacuum skin packaging performance

The films were tested as per their vacuum skin packaging performance in a Sealpac machine. 25 dummy meat pieces were used for evaluation of each one having as reference the forming capabilities of each one and the presentation of the packs.

The dummies represented different levels of difficulty to pack but same for the three films so that comparison is fair.

| FILM REFERENCE | TOTAL NUMBER OF PACKS | NUMBER OF ACCEPTABLE PACKS |
|---|---|---|
| Example 1 | 25 | 21 |
| Example 2 | 25 | 23 |
| Example 3 (comparative) | 25 | 19 |

The result shows that the substitution of EVA by ethylene acrylate copolymer giving such beneficial properties is surprising in view of the current prior art.

## Claims

1. A crosslinked multilayer film suitable for vacuum skin packaging, comprising at least 30% per volume of an ethylene acrylate copolymer.

2. A crosslinked multilayer film according to claim 1, wherein the film comprises from 40% to 90% per volume, preferably from 50% to 80% per volume of an ethylene acrylate copolymer.

3. The crosslinked multilayer film according to claim 1 or 2, wherein the film further comprises an oxygen barrier copolymer.

4. The crosslinked multilayer film according to claim 3, wherein the oxygen barrier copolymer is selected from EVOH, PVDC and polyamide.

5. The crosslinked multilayer film according to any one of the preceding claims, wherein the film comprises an outer sealing layer, another outer layer and a core layer between them.

6. The crosslinked multilayer film according to claim 5, wherein the film further comprises a first abuse layer between the outer layer and the core layer and a second abuse layer between the core layer and the outer sealing layer.

7. The crosslinked multilayer film according to claim 6, wherein the ethylene acrylate copolymer is comprised in the outer sealing layer and/or in an abuse layer of the film.

8. The crosslinked multilayer film according to any one of the preceding claims, wherein the ethylene acrylate copolymer comprises at least 5% per mass acrylate.

9. The crosslinked multilayer film according to claim 8, wherein the ethylene acrylate copolymer comprises at least 10% per mass acrylate.

10. The crosslinked multilayer film according to claim 9, wherein the ethylene acrylate copolymer comprises at least 12% per mass acrylate.

11. The crosslinked multilayer film according to any one of the preceding claims, wherein the ethylene acrylate copolymer has a melting point of less than 100 °C.

12. The multilayer film according to any one of the preceding claims, wherein the ethylene acrylate copolymer is EMA, EBA, EMMA or EEA.

13. The multilayer film according to claim 12, wherein the ethylene acrylate copolymer is EMA or EBA.

14. The multilayer film of any of the preceding claims, wherein the film is produced by a hot blown film process.

15. Use of the multilayer film according to one of claims 1 to 14 in a vacuum skin packaging process.
